(19) Europäisches Patentamt
European Patent Office
Office européen des brevets

(11) Veröffentlichungsnummer: **0 209 653**
**B1**

(12) **EUROPÄISCHE PATENTSCHRIFT**

(45) Veröffentlichungstag der Patentschrift: **09.08.89**

(51) Int. Cl.⁴: **C09J 3/14,** C08L 33/12

(21) Anmeldenummer: **86106177.8**

(22) Anmeldetag: **06.05.86**

(54) **Metallklebstoff.**

(30) Priorität: **01.07.85 DE 3523480**

(43) Veröffentlichungstag der Anmeldung:
**28.01.87 Patentblatt 87/5**

(45) Bekanntmachung des Hinweises auf die Patenterteilung:
**09.08.89 Patentblatt 89/32**

(84) Benannte Vertragsstaaten:
**BE DE FR GB IT NL SE**

(56) Entgegenhaltungen:
**FR-A- 2 137 941**
**FR-A- 2 291 248**

(73) Patentinhaber: **Teroson GmbH, Hans-Bunte-Strasse 4, D-6900 Heidelberg 1(DE)**

(72) Erfinder: **Butschbacher, Günter, In den Gottesäckern 3, D-6922 Meckesheim(DE)**

(74) Vertreter: **UEXKÜLL & STOLBERG Patentanwälte, Beselerstrasse 4, D-2000 Hamburg 52(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft einen Metallklebstoff in Form eines Plastisols aus einem Acrylharz, das heterocyclische Gruppen mit mindestens einem N-Atom im Ring aufweist, Weichmachern, einem Haftvermittler und gegebenenfalls inerten Füllstoffen sowie weiteren Zusatzstoffen.

Plastisole auf Basis von Acrylatpolymerisaten sind bereits bekannt. In der DE-PS 24 54 235 ist ein bei Raumtemperatur lagerstabiles, bei Erhitzen auf höhere Temperaturen gelierendes Plastisol auf Acrylatbasis beschrieben, das ein Methylmethacrylatcopolymerisat, einen mit dem Copolymerisat verträglichen organischen Weichmacher, gegebenenfalls inerte Füllstoffe sowie weitere übliche Zusatzstoffe und gegebenenfalls einen Haftvermittler enthält. Als geeignete Haftvermittler sind Triethylenglycoldimethylacrylat, Trimethyloltrimethylacrylat in Kombination mit Peroxiden, die bei der Gelierungstemperatur zerfallen und eine radikalische Polymerisation des Haftvermittlers auslösen, flüssige oder feste Phenol- bzw. Resorzinharze mit geringem Formaldehydgehalt, Epoxidharze mit in der Hitze reagierenden Härtern wie Acetoguanamin oder Dicyandiamid und schließlich Aminosilane genannt. Die so erhaltenen Plastisole sind besonders geeignet als Korrosions- und Abriebschutz für Stahlbleche, beispielsweise als Unterbodenschutz für Autos. Die Haftungseigenschaften sind jedoch nicht so gut, daß diese Plastisole sich auch als Metallkleber durchgesetzt hätten.

Aus der DE-PS 25 29 732 ist bekannt, daß die Haftungseigenschaften eines solchen Plastisols dadurch verbessert werden können, daß man in das Polymerisat oder Copolymerisat 0,1 bis 10 Gew.% eines oder mehrerer copolymerisierbarer Monomere einpolymerisiert, welche eine heterocyclische Gruppe mit mindestens einem N-Atom im Ring enthalten. Zur weiteren Verbesserung der Haftung kann man dem Plastisol einen mit der heterocyclischen Gruppe des einpolymerisierten Comonomeren reagierenden zusätzlichen Vernetzer zufügen. Als für diesen Zweck geeignete Vernetzer sind Epoxidharze und mehrbasische Carbonsäuren wie Benzoltricarbonsäure, Adipinsäure, Maleinsäure und Itaconsäure genannt. Die so erhaltenen Plastisole zeigen eine deutlich verbesserte Haftung und Eignung zur Verklebung von entfetteten Blechen und von elektrophoretisch grundierten Blechen.

Die Verbindung von Blechteilen in der metallverarbeitenden Industrie, beispielsweise in der Autoindustrie, ist dadurch besonders erschwert, daß die Bleche aufgrund unterschiedlicher Vorbehandlung die verschiedensten Oberflächeneigenschaften aufweisen. So gelangen zum Beispiel elektrolytisch verzinkte Bleche, feuerverzinkte Bleche sowie mit Tiefziehölen und/oder Korrosionsschutzölen beschichtete Bleche nebeneinander zum Einsatz und sollen miteinander verbunden werden. Die bekannten Plastisole zeigen zwar auf bestimmten Oberflächentypen gute Haftungseigenschaften, auf anderen jedoch versagen sie.

Aufgabe der Erfindung ist es daher, zur Überwindung dieses Nachteils einen Metallklebstoff zu schaffen, der unabhängig von der Oberflächenbeschaffenheit der Blechteile gute Festigkeitswerte mit kohäsivem Bruchbild ergibt.

Die Aufgabe wird durch einen Metallklebstoff in Form eines Plastisols der eingangs genannten Art gelöst, der als Haftvermittler einen Hydroxy- und primäre und/oder sekundäre Aminosubstituenten tragenden Polyether enthält, der durch Umsetzung eines Epoxyharzes mit mindestens einem Mol eines aliphatischen oder aromatischen Amins je Epoxyäquivalent erhältlich ist. Der so erhaltene Polyether trägt entlang seiner Kette Hydroxygruppen und weist an seinen Enden Aminosubstituenten auf. Die Erfindung ist jedoch nicht auf diese spezielle Verteilung der Substituenten beschränkt.

Erfindungsgemäß als Haftvermittler geeignete Produkte sind im Handel erhältlich. Diese Produkte wurden bislang als Härter für Eopxyharze und als Vernetzer eines Haftvermittlers für PVC-Plastisole verwendet. Daraus konnte nicht geschlossen werden, daß sie sich als Haftvermittler für den erfindungsgemäßen Metallklebstoff auf Acrylharzbasis eignen.

Als primäre oder sekundäre Aminosubstituenten werden in der vorliegenden Anmeldung Substitutionsprodukte des Ammoniaks bezeichnet, bei denen ein oder zwei H-Atome des $NH_3$ durch Alkyl- oder Arylreste ersetzt sind. Beispiele solcher Gruppierungen sind in Ethylamin und Diethylamin verwirklicht. Nicht unter diese Bezeichnung fallen andersartige Stickstoffunktionen wie Amid-, Cyanid-, Nitro-, Nitroso-, Ureido- oder Guanidinosubstituenten.

Zur Charakterisierung bevorzugter Formen des erfindungsgemäßen Haftvermittlers ist es zweckmäßig, von der genannten Herstellungsmöglichkeit auszugehen, die wegen der Verfügbarkeit von Epoxyharzen bevorzugt ist. Für die genannte Umsetzung sind insbesondere araliphatische Epoxyharze geeignet, z.B. solche auf Basis von Bisphenol A. Als Aminkomponente sind niedermolekulare aliphatische Polyamine bevorzugt, insbesondere Ethylendiamin und Diethylentriamin. Am meisten bevorzugt ist Ethylendiamin.

Die erfindungsgemäßen Haftvermittler sind ganz allgemein zur Verbesserung der Haftungseigenschaften von Plastisolen der eingangs genannten Art geeignet, d.h. von beliebigen Plastisolen auf Basis von Acrylharzen, die heterocyclische Gruppen mit mindestens einem N-Atom im Ring aufweisen. Aus der Vielzahl möglicher Kombinationen hat sich jedoch die Kombination aus einem Polymethylmethacrylat, das Imidazolgruppen aufweist, als Acrylharzkomponente mit einem Haftvermittler besonders zweckmäßig erwiesen, der durch Umsetzung eines araliphatischen Epoxyharzes auf Basis von Bisphenol A mit mindestens einem Mol Ethylendiamin je Epoxyäquivalent erhältlich ist.

Der Haftvermittler wird dem erfindungsgemäßen Metallklebstoff in den bei Plastisolen üblichen Mengen einverleibt, d.h. es werden 1 bis 50, vorzugsweise 10 bis 25 Gewichtsteile Haftvermittler je 100 Teile Acrylharz verwendet. Bezogen auf 100 Gewichtsteile Acrylharz enthält das Plastisol darüber hinaus 65 bis 800 Teile organischen Weichmacher und gegebenenfalls bis zu 700 Teile inerte Füllstoffe sowie weitere Zusatzstoffe.

Der erfindungsgemäße Metallklebstoff weist den weiteren Vorteil auf, daß er bei niedrigen Temperaturen (ca. 100°C) angeliert und bereits ausreichende Haftfestigkeit besitzt. Dadurch wird die Metallklebstoffschicht bei der nachfolgenden Bearbeitung der Blechteile bis zum Einbrennzyklus nicht beschädigt, also beispielsweise nicht durch Waschflüssigkeiten ausgewaschen.

Im folgenden wird die Erfindung anhand von Beispielen näher erläutert.

In den Beispielen wurde für die Formulierung der erfindungsgemäßen Klebstoffe ein Haftvermittler verwendet, wie er durch Umsetzung eines Epoxyharzes auf Basis von Bisphenol A mit einem Überschuß an Ethylendiamin erhältlich ist. Aufgrund analytischer Untersuchungen, insbesondere $^{1}$H-NMR-, $^{13}$C-NMR und IR-Spektroskopie kann dem überwiegenden Bestandteil dieses Haftvermittlers die folgende Struktur zugeordnet werden:

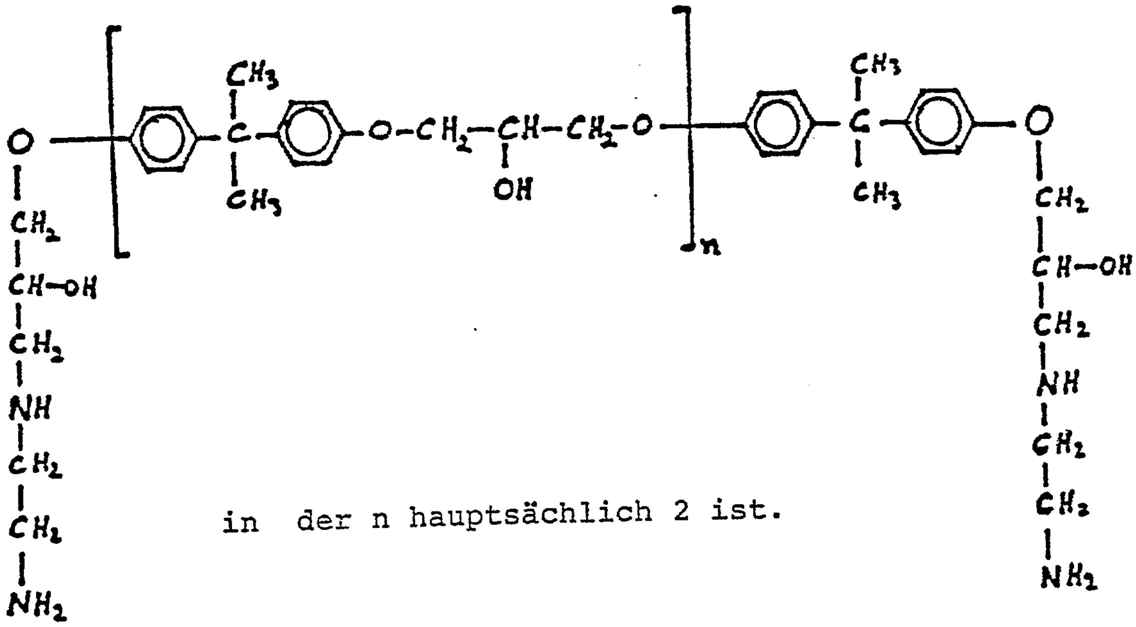

in der n hauptsächlich 2 ist.

Die in den Beispielen angegebenen Festigkeitswerte wurden als Zugscherfestigkeitswerte bestimmt. Die Schichtstärke der jeweils geprüften Verklebung betrug 0,3 mm.

Zur Bestimmung der Haftfestigkeit wurde eine Materialraupe auf die zu untersuchende Oberfläche aufgetragen und bei der jeweils angegebenen Temperatur eingebrannt. Nach dem Abkühlen auf Raumtemperatur wurde die Haftfestigkeit von Hand mittels eines Messers geprüft. Zur Beurteilung wurde eine Bewertungsskala von "0" bis "10" gewählt, wobei "0" keine Haftung und "10" sehr gute Haftung bedeutet. Von den dazwischen liegenden Werten kommt der Bewertung "5" die Bedeutung einer ausreichenden Haftung für die nachfolgende Bearbeitung zu.

Beispiel 1

Aus den folgenden Bestandteilen wurde ein Metallklebstoff hergestellt:

| | |
|---|---|
| Polymethylmethacrylat-Copolymer mit Imidazolgruppen | 20,00 Gew.% |
| Dinonylphthalat | 33,40 Gew.% |
| Calciumoxid | 2,00 Gew.% |
| Schwerspat | 27,00 Gew.% |
| Graphit | 15,00 Gew.% |
| Netzmittel | 0,10 Gew.% |
| Haftvermittler | 2,50 Gew.% |

Zur Prüfung der Haftfestigkeit wurde eine Materialraupe aus diesem Plastisol auf ein Karosserie-Rohblech aufgetragen und 10 Minuten lang bei 90°C eingebrannt. Die Haftung wurde mit der Note "5" bewertet.

Die Prüfung wurde mit dem Unterschied wiederholt, daß 20 Minuten lang bei 180°C eingebrannt wurde. Unter ansonsten gleichen Bedingungen ergab sich nun eine Haftfestigkeit der Note "10".

Beispiel 2

Aus den folgenden Bestandteilen wurde ein Metallklebstoff hergestellt:

| | |
|---|---|
| Polymethylmethacrylat-Copolymer mit Imidazolgruppen | 20,00 Gew.% |
| Dinonylphthalat | 33,40% |
| Calciumoxid | 2,00 Gew.% |
| Schwerspat | 27,00 Gew.% |
| Titandioxid | 15,00 Gew.% |
| Netzmittel | 0,10 Gew.% |
| Haftvermittler | 2,50 Gew.% |

Die Haftfestigkeit wurde wie in Beispiel 1 auf Karosserie-Rohblech geprüft. Nach 10 Minuten Einbrennen bei 90°C wurde eine Haftfestigkeit der Note "5" ermittelt. Nach 20 Minuten Einbrennen bei 180°C wurde eine Haftfestigkeit der Note "10" ermittelt.

Im Vergleich mit Beispiel 1 ist zu erkennen, daß ein Austausch der Füllstoffe bzw. inerten Zusatzstoffe, in diesem Fall von Graphit durch Titandioxid, keinen erkennbaren Einfluß auf die Haftfestigkeit des Metallklebstoffs hat.

Weiterhin machen die Beispiele 1 und 2 deutlich, daß die erfindungsgemäßen Metallklebstoffe schon bei relativ niedriger Temperatur angelieren und dann eine für die Weiterverarbeitung ausreichende Haftfestigkeit besitzen.

Beispiel 3

Aus den folgenden Bestandteilen wurde ein Metallklebstoff hergestellt:

| | |
|---|---|
| Polymethylmethacrylat-Copolymer mit Imidazolgruppen | 20,00 Gew.% |
| Aromatische Weichmacher | 33,00 Gew.% |
| Calciumoxid | 2,00 Gew.% |
| Kreide | 42,50 Gew.% |
| Haftvermittler | 2,50 Gew.% |

Zunächst wurde die Haftfestigkeit dieses Metallklebstoffs wiederum auf Karosserie-Rohblech getestet, wozu eine Materialraupe 12 Minuten lang bei 170°C eingebrannt wurde. Es wurde eine Haftfestigkeit der Note "10" ermittelt.

Dieser Test wurde unter ansonsten gleichen Bedingungen auf einem elektrolytisch verzinkten Blech wiederholt. In diesem Fall wurde eine Haftfestigkeit der Note "9" ermittelt.

Ein unter gleichen Bedingungen wiederholter Test mit feuerverzinktem Blech ergab wiederum die Note "9".

Zwei Stücke aus Karosserie-Rohblech wurden mit diesem Metallkleber miteinander verklebt. Zu diesem Zweck wurde der Metallkleber zwischen den beiden Blechen aufgetragen, so daß eine Fläche von etwa 5 $cm^2$ mit einer Schichtdicke von 0,3 mm bedeckt war. Dann wurde ein Einbrennzyklus von 20 Minuten Dauer bei 170°C durchgeführt. Die Zugscherfestigkeit dieser Verklebung wurde zu 280 $N/cm^2$ bestimmt. Es wurde ein vollständig kohäsives Bruchbild erhalten.

Dieser Metallklebstoff wies somit ausgezeichnete Eigenschaften zur Verwendung auf verschiedenen Blechen auf.

Beispiel 4

Aus den folgenden Bestandteilen wurde ein Metallklebstoff hergestellt:

| | |
|---|---|
| Polymethylmethacrylat-Copolymer mit Imidazolgruppen | 22,00 Gew.% |
| Aromatiche Weichmacher | 13,00 Gew.% |
| Cumaron-Inden-Harz | 25,00 Gew.% |
| Calciumoxid | 2,00 Gew.% |
| Kreide | 25,00 Gew.% |
| Graphit | 10,00 Gew.% |
| Haftvermittler | 3,00 Gew.% |

Zunächst wurde die Haftfestigkeit dieses Metallklebstoffes auf einem Karosserieblech geprüft, das mit 12 g/m² eines Platinenwaschöls beschichtet war. Zu diesem Zweck wurde eine Materialraupe 22 Minuten lang bei 175°C eingebrannt. Es wurde eine Haftfestigkeit der Note "10" ermittelt.

Diese Prüfung wurde unter ansonsten gleichen Bedingungen mit einem Karosserieblech wiederholt, das mit 12 g/m² eines Tiefziehöls beschichtet war. Wiederum wurde eine Haftfestigkeit der Note "10" ermittelt.

Die Prüfung wurde mit einem Karosserieblech wiederholt, das mit 12 g/m² eines Korrosionsschutzöls beschichtet war. Unter ansonsten gleichen Bedingungen wurde wiederum eine Haftfestigkeit der Note "10" ermittelt.

Die Haftfestigkeit des Metallklebstoffes wurde auf einem unbeschichteten Karosserie-Rohblech getestet. Bei diesem Versuch wurde eine Materialraupe 20 Minuten lang bei 140°C eingebrannt. Es wurde eine Haftfestigkeit der Note "10" ermittelt.

Der Versuch wurde unter ansonsten gleichen Bedingungen mit einem elektrolytisch verzinkten Blech wiederholt. Wiederum wurde eine Haftfestigkeit der Note "10" ermittelt.

Zwei Stücke aus Karosserie-Rohblech wurden unter den in Beispiel 3 angegebenen Bedingungen miteinander verklebt. Es wurde eine Zugscherfestigkeit von 427 N/cm² gemessen. Das Bruchbild war vollständig kohäsiv.

Dieses Beispiel zeigt, daß die Wirksamkeit des erfindungsgemäßen Metallklebstoffs durch die diversen öligen Beschichtungen, wie sie beispielsweise in der Automobilindustrie angewandt werden, nicht beeinträchtigt wird. Der erfindungsgemäße Metallklebstoff ist somit universell einsatzfähig und gewährleistet eine ausgezeichnete Verklebung.

Vergleichsversuch 1

Es wurde ein Vergleichsversuch durchgeführt, bei dem als Acrylharzkomponente ein Polymethylmethacrylat-Copolymer verwendet wurde, das keine heterocyclischen Gruppen mit mindestens einem N-Atom im Ring aufwies. Diese Vergleichsformulierung wurde aus den folgenden Bestandteilen hergestellt:

| | |
|---|---|
| Polymethylmethacrylat-Copolymer | 20,00 Gew.% |
| Aromatischer Weichmacher | 33,00 Gew.% |
| Calciumoxid | 2,00 Gew.% |
| Schwerspat | 42,50 Gew.% |
| Haftvermittler | 2,50 Gew.% |

Eine Materialraupe aus dieser Vergleichsformulierung wurde auf ein Karosserie-Rohblech aufgetragen und einem Einbrennzyklus von 20 Minuten Dauer bei 170°C unterworfen. Es wurde eine Haftfestigkeit der Note "0" ermittelt.

Dieses Beispiel macht deutlich, daß es erfindungsgemäß wesentlich ist, daß der Metallklebstoff ein Acrylharz enthält, welches heterocyclische Gruppen mit mindestens einem N-Atom im Ring aufweist.

Vergleichsversuch 2

Eine weitere Vergleichsformulierung wurde hergestellt, wobei nunmehr ein Polymethylmethacrylat-Copolymer mit Carboxylgruppen verwendet wurde:

| | |
|---|---|
| Polymethylmethacrylat-Copolymer mit Carboxylgruppen | 20,00 Gew.% |
| Dinonylphthalat | 33,00 Gew.% |
| Calciumoxid | 2,00 Gew.% |
| Schwerspat | 42,50 Gew.% |
| Haftvermittler | 2,50 Gew.% |

Eine Materialraupe aus dieser Vergleichsformulierung wurde auf ein Karosserie-Rohblech aufgetragen und einem Einbrennzyklus von 20 Minuten Dauer bei 180°C unterworfen. Es wurde eine Haftfestigkeit der Note "0" ermittelt.

Auch dieses Beispiel macht noch einmal deutlich, daß es erfindungsgemäß wesentlich ist, daß der Metallklebstoff ein Acrylharz enthält, das heterocyclische Gruppen mit mindestens einem N-Atom im Ring enthält.

Vergleichsversuch 3

Eine weitere Vergleichsformulierung wurde aus den folgenden Bestandteilen hergestellt:

| | |
|---|---|
| PVC-Homopolymer | 18,00 Gew.% |
| PVC-Copolymer | 2,00 Gew.% |
| Dioctylphthalat | 32,00 Gew.% |
| Schwerspat | 22,00 Gew.% |
| Kreide | 15,00 Gew.% |
| Calciumoxid | 7,40 Gew.% |
| Titandioxid | 0,50 Gew.% |
| Russ | 0,10 Gew.% |
| Haftvermittler | 3,00 Gew.% |

Eine Materialraupe aus dieser Vergleichsformulierung wurde auf ein Karosserie-Rohblech aufgetragen und einem Einbrennzyklus von 30 Minuten Dauer bei 140°C unterworfen. Es wurde eine Haftfestigkeit der Note "0" ermittelt.

Auch dieses Beispiel verdeutlicht noch einmal die Bedeutung der erfindungsgemäßen Kombination aus Acrylharz und Haftvermittler für die resultierende Haftfestigkeit auf Metallsubstraten.

Vergleichsversuch 4

Es wurde ein Vergleichsversuch ohne den erfindungsgemäßen Haftvermittler durchgeführt.

| | |
|---|---|
| Polymethylmethacrylat-Copolymer mit Imidazolgruppen | 20,00 Gew.% |
| Aromatischer Weichmacher | 33,00 Gew.% |
| Calciumoxid | 2,00 Gew.% |
| Kreide | 45,00 Gew.% |

Zunächst wurde die Haftfestigkeit dieses Metallklebstoffes wiederum auf Karosserie-Rohblech getestet, wozu eine Materialgruppe 12 Minuten lang bei 170°C eingebrannt wurde. Es wurde eine Haftfestigkeit der Note "5" ermittelt.

Dieser Test wurde unter ansonsten gleichen Bedingungen auf einem elektrolytisch verzinkten Blech wiederholt. In diesem Fall wurde eine Haftfestigkeit der Note "9" ermittelt.

Ein unter gleichen Bedingungen wiederholter Test mit feuerverzinktem Blech ergab jedoch die Note "0".

Zwei Stücke aus Karosserie-Rohblech wurden mit diesem Metallklebstoff miteinander verklebt. Zu diesem Zweck wurde der Metallklebstoff zwischen den beiden Blechen aufgetragen, so daß eine Fläche von 5 $cm^2$ mit einer Schichtstärke von 0,3 mm bedeckt war. Dann wurde ein Einbrennzyklus von 20 Minuten Dauer bei 170°C durchgeführt. Die Zugscherfestigkeit dieser Verklebung wurde zu 206 $N/cm^2$ bestimmt. Es wurde ein Bruchbild erhalten, das zu 50% adhäsiv war.

Dieser Metallklebstoff wies somit geringere Haftfestigkeit und geringere Zugscherfestigkeit als der erfindungsgemäße Metallklebstoff auf.

Vergleichsversuch 5

Es wurde ein Vergleichsversuch mit einem der in der DE-PS 24 54 235 aufgeführten Haftvermittler durchgeführt.

| | |
|---|---|
| Polymethylmethacrylat-Copolymer mit Imidazolgruppen | 20,00 Gew.% |
| Aromatischer Weichmacher | 33,00 Gew.% |
| Calciumoxid | 2,00 Gew.% |
| Kreide | 42,25 Gew.% |
| Epoxidharz | 2,50 Gew.% |
| Dicyandiamid | 0,25 Gew.% |

Zunächst wurde die Haftfestigkeit dieses Metallklebstoffes wiederum auf Karosserie-Rohblech getestet, wozu eine Materialraupe 12 Minuten lang bei 170°C eingebrannt wurde. Es wurde eine Haftfestigkeit der Note "0" ermittelt.

Dieser Test wurde unter sonst gleichen Bedingungen auf einem elektrolytisch verzinktem Blech wiederholt. In diesem Fall wurde auch eine Haftfestigkeit der Note "0" ermittelt.

Ein unter gleichen Bedingungen wiederholter Test mit feuerverzinktem Blech ergab wiederum die Note "0".

Zwei Stücke aus Karosserie-Rohblech wurden mit diesem Metallklebstoff miteinander verklebt. Zu diesem Zweck wurde der Metallklebstoff zwischen den beiden Blechen aufgetragen, so daß eine Fläche von 5 $cm^2$ mit einer Schichtdicke von 0,3 mm bedeckt war. Dann wurde ein Einbrennzyklus von 20 Minuten Dauer bei 170°C durchgeführt. Die Zugscherfestigkeit dieser Verklebung wurde zu 237 $N/cm^2$ bestimmt Es wurde ein vollständig adhäsives Bruchbild erhalten.

Dieser Metallklebstoff wies somit schlechtere Haftfestigkeit und geringere Zugscherfestigkeit als der erfindungsgemäße Metallklebstoff auf.

## Patentansprüche

1. Metallklebstoff in Form eines Plastisols aus einem Acrylharz, das heterocyclische Gruppen mit mindestens einem N-Atom im Ring aufweist, Weichmachern, einem Haftvermittler und gegebenenfalls inerten Füllstoffen sowie weiteren Zusatzstoffen, dadurch gekennzeichnet, daß er als Haftvermittler einen Hydroxy- und primäre und/oder sekundäre Aminosubstituenten tragenden Polyether enthält, der durch Umsetzung eines Epoxyharzes mit mindestens einem Mol eines aliphatischen oder aromatischen Amins je Epoxyäquivalent erhältlich ist.

2. Metallklebstoff nach Anspruch 1, dadurch gekennzeichnet, daß der Haftvermittler durch Umsetzung eines Epoxyharzes mit mindestens einem Mol eines niedermolekularen aliphatischen Polyamins je Epoxyäquivalent erhältlich ist.

3. Metallklebstoff nach Anspruch 1 oder 2, dadurch gekennzeichnet, daß das Epoxyharz ein araliphatisches Epoxyharz ist.

4. Metallklebstoff nach einem der Ansprüche 2 oder 3, dadurch gekennzeichnet, daß das Polyamin Ethylendiamin oder Diethylentriamin ist.

5. Metallklebstoff nach Anspruch 4, dadurch gekennzeichnet, daß er als Acrylharz ein Polymethylmethacrylat, das Imidazolgruppen aufweist, und einen Haftvermittler enthält, der durch Umsetzung eines araliphatischen Epoxyharzes auf Basis von Bisphenol A mit mindestens einem Mol Ethylendiamin je Epoxyäquivalent erhältlich ist.

6. Metallklebstoff nach einem der Ansprüche 1 bis 5, dadurch gekennzeichnet, daß er 1,0 bis 50 Gewichtsteile Haftvermittler je 100 Teile Acrylharz enthält.

## Claims

1. Metal-bonding adhesive in the form of a plastisol comprising an acrylic resin which has heterocyclic groups with at least one N atom in the ring, plasticizers, an adhesion promoter and optionally inert fillers and further additives, characterized in that the adhesion promoter is a polyether which carries hydroxyl and primary and/or secondary amino substituents and is obtainable by reacting an epoxy resin with at least one mole of an aliphatic or aromatic amine per epoxy equivalent.

2. Metal-bonding adhesive according to Claim 1, characterized in that the adhesion promoter is obtainable by reacting an epoxy resin with at least one mole of a low molecular aliphatic polyamine per epoxy equivalent.

3. Metal-bonding adhesive according to Claim 1 or 2, characterized in that the epoxy resin is an araliphatic epoxy resin.

4. Metal-bonding adhesive according to either of Claims 2 and 3, characterized in that the polyamine is ethylenediamine or diethylenetriamine.

5. Metal-bonding adhesive according to Claim 4, characterized in that the acrylic resin is a polymethyl methacrylate which has imidazole groups and the adhesion promoter is obtainable by reacting an araliphatic epoxy resin based on bisphenol A with at least one mole of ethylenediamine per epoxy equivalent.

6. Metal-bonding adhesive according to any one of Claims 1 to 5, characterized in that it contains 1.0 to 50 parts by weight of adhesion promoter per 100 parts by weight of acrylic resin.

**Revendications**

1. Colle pour métaux sous forme d'un plastisol en une résine acrylique, qui présente des groupes hétérocycliques avec au moins un atome de N dans le cycle, des plastifiants, un agent d'adhérence et éventuellement des charges inertes ainsi que d'autres additifs, caractérisée en ce qu'elle contient en tant qu'agent d'adhérence un polyéther portant un substituant hydroxy et des substituants amino primaires et/ou secondaires qui peut être obtenu par réaction d'une résine époxy avec au moins une mole d'une amine aliphatique ou aromatique par équivalent d'époxy.

2. Colle pour métaux selon la revendication 1, caractérisée en ce que l'agent d'adhérence peut être obtenu par réaction d'une résine époxy avec au moins une mole d'une polyamine aliphatique de faible poids moléculaire par équivalent d'époxy.

3. Colle pour métaux selon la revendication 1 ou 2, caractérisée en ce que la résine époxy est un résine époxy arylaliphatique.

4. Colle pour métaux selon l'une des revendications 2 ou 3, caractérisée en ce que la polyamine est l'éthylènediamine ou la diéthylènetriamine.

5. Colle pour métaux selon la revendication 4, caractérisée en ce qu'elle contient en tant que résine acrylique un polyméthylméthacrylate qui présente des groupes imidazole, et un agent d'adhérence qui peut être obtenu par réaction d'une résine époxy arylaliphatique à base de bisphénol A avec au moins une mole d'éthylènediamine par équivalent d'époxy.

6. Colle pour métaux selon l'une des revendications 1 à 5, caractérisée en ce qu'elle contient de 1,0 à 50 parties en poids d'agent d'adhérence pour 100 parties de résine acrylique.